# EUROPÄISCHE PATENTSCHRIFT

(11) **EP 2 612 058 B1**
(45) Veröffentlichungstag und Bekanntmachung des Hinweises auf die Patenterteilung: **12.07.2017**
(21) Anmeldenummer: 11745697.0
(22) Anmeldetag: 12.08.2011
(51) Int. Cl.: F16H 57/027

(54) **SYSTEM ZUR BE- UND ENTLÜFTUNG VON EIN FLUIDVOLUMEN ENTHALTENDEN BEHÄLTNISSEN**
SYSTEM FOR VENTILATING AND VENTING CONTAINERS CONTAINING A FLUID VOLUME
SYSTÈME D'AÉRATION ET DE VENTILATION DE RÉSERVOIRS CONTENANT UN VOLUME DE FLUIDE

(30) Priorität: 03.09.2010 DE 102010036294
(43) Veröffentlichungstag der Anmeldung: 10.07.2013
(73) Patentinhaber: Hydac Filtertechnik GmbH, 66280 Sulzbach/Saar (DE)
(72) Erfinder: SAKRASCHINSKY, Michael, 66386 St. Ingbert (DE); KLEIN, Volkmar, 66482 Zweibrücken (DE)
(74) Vertreter: Bartels, Martin Erich Arthur
(86) Internationale Anmeldenummer: PCT/EP2011/004051
(87) Internationale Veröffentlichungsnummer: WO 2012/028255

(56) Entgegenhaltungen:
- WO-A2-2007/022340
- WO-A2-2007/133403
- DE-A1- 10 111 241
- US-A1- 2008 223 347

## Beschreibung

Die Erfindung betrifft ein System zur Be- und Entlüftung von ein Fluidvolumen enthaltenden Behältnissen, wie eine Ölfüllung enthaltenden Getriebegehäusen, mit den Merkmalen des Oberbegriffes des Patentanspruches 1.

Systeme dieser Art sind Stand der Technik. In technischen Anlagen befindliche Behältnisse, die mit Betriebsfluiden befüllt sind, beispielsweise mit einer Ölfüllung versehene Getriebe, beinhalten über dem Ölspiegel ein gewisses Luftvolumen, das unter anderem zur Kompensation von Volumenänderungen der Ölfüllung dient, die durch Temperaturänderungen hervorgerufen sind. Durch das vom Behältnis, beispielsweise Getriebegehäuse, zur Atmosphäre führende Leitungssystem wird verhindert, dass sich hierbei Druckunterschiede aufbauen, die zu Undichtigkeiten am Dichtsystem, etwa an Gehäusedurchtritten, führen könnten. Bei über einem großen Temperaturbereich betreibbaren Anlagen, wie dies beispielsweise bei Getriebegehäusen der Fall ist, wo zwischen Kaltstart und Betriebstemperatur eine große Temperaturspanne liegt, resultieren im Betrieb nicht unbeträchtliche Luftvolumenströme innerhalb des Leitungssystems zum Druckausgleich. Dabei besteht die Gefahr, dass es mit dem Volumenstrom zu einem Austritt von Öl oder Ölkondensat zur Atmosphäre oder zu einem Eintritt von Fremdstoffen aus der Atmosphäre kommt.

Aus der WO 2007/133403 A2 geht in Übereinstimmung mit den Merkmalen des Oberbegriffes des Patentanspruches 1 eine Entlüftungskappe hervor, die auf einen Tank aufschraubbar ist. Die Kappe weist zwei konzentrische Innenräume auf, die durch ein bezüglich ihrer Längsachse vertikal ausgerichtetes Filtermedium voneinander getrennt sind. Das Filtermedium ist für flüssige und feste Stoffe undurchlässig. Die Innenräume sind jeweils mit Öffnungen versehen, die ein Abfließen von darin enthaltenen Flüssigkeiten ermöglichen.

Die US 2008/0223347 A1 beschreibt ein Motorentlüftungssystem, das einen Luftfilter aufweist, der hydro- und oleophobe Eigenschaften hat.

Die WO 2007/022340 A2 offenbart einen Rohrmembranentlüfter, der ebenfalls hydro- und oleophobe Eigenschaften hat.

Ausgehend von diesem Stand der Technik stellt sich die Erfindung die Aufgabe, ein Be- und Entlüftungssystem zur Verfügung zu stellen, das sich hinsichtlich der Verhinderung des Austrittes von Stoffen flüssiger Phase und des Eintretens von Fremdstoffen aus der Atmosphäre durch ein erhöhtes Maß an Betriebssicherheit auszeichnet.

Erfindungsgemäß ist diese Aufgabe durch ein Be- und Entlüftungssystem gelöst, das die Merkmale des Patentanspruches 1 in seiner Gesamtheit aufweist.

Demgemäß besteht eine wesentliche Besonderheit der Erfindung darin, dass am Separiergehäuse Leitungsanschlüsse derart gelegen sind, dass am Trennmedium abgeschiedene Stoffe flüssiger Phase aus dem ersten Raum zum Behältnis und aus dem zweiten Raum zur Atmosphäre abfließen können.

Das Separiergehäuse bildet einen den ersten und zweiten Raum umgebenden Hohlzylinder, dessen Achse bei der Funktionslage horizontal verläuft, so dass der untenliegende Bereich der Innenwand des Hohlzylinders den den ersten Raum begrenzenden Boden bildet, an dem der erste Leitungsanschluss mündet.

Aufgrund der oleophoben Eigenschaft des Trennmediums wird so verhindert, dass innerhalb des Separiergehäuses ein Übertritt von Öl auf die Atmosphärenseite erfolgt. Gleichzeitig verhindert die hydrophobe Eigenschaft des Trennmediums einen Eintritt von polaren Fluiden, z.B. Wasser, bis zu einem materialspezifischen Druckunterschied aus der Umgebung, während ein Druckausgleich in Form des Luftvolumens ohne Belastung mit Stoffen flüssiger Phase bei nicht vollständig flüssigkeitsbenetzter Oberfläche möglich ist. Der durch das erfindungsgemäße System gebotene Schutz gegen Eindringen von Wasser aus der Umgebung ist besonders wesentlich und vorteilhaft, wenn das System bei Behältnissen von Anlagen benutzt wird, die in einer nassen Umgebung betrieben werden. Dies ist insbesondere bei Behältnissen, wie Getriebegehäusen, in der Fahrzeugtechnik der Fall, wo bei Betrieb der Fahrzeuge bei Nässe oder bei der Reinigung der Fahrzeuge in Waschanlagen oder beim Reinigen von Hand Wassereintritte zu befürchten wären, wenn die erfindungsgemäß gebotene Schutzwirkung nicht vorhanden wäre.

Bei besonders vorteilhaften Ausführungsbeispielen ist das Trennmedium durch ein oleo- und hydrophobe Eigenschaften aufweisendes Filtermedium gebildet. Dadurch scheidet das Trennmedium nicht nur gegebenenfalls eintretendes Wasser ab, sondern bietet auch einen Schutz gegen Eindringen von Festpartikeln. Insbesondere bei Anwendung in der Fahrzeugtechnik ist dadurch verhindert, dass Straßenstaub oder anderweitige Schmutzpartikel im Betrieb in das Getriebe gelangen können.

Mit besonderem Vorteil ist die Anordnung so getroffen, dass eine Halterung vorgesehen ist, mittels deren das Separiergehäuse derart festlegbar ist, dass es in seiner Funktionslage auf einem oberhalb des Behältnisses gelegenen Höhenniveau liegt, und dass der erste Raum an den untenliegenden Boden des Separiergehäuses angrenzt, an dem der zum Behältnis führende erste Leitungsanschluss mündet. Dadurch ist sichergestellt, dass Stoffe flüssiger Phase, wie Öl oder Ölkondensat aus einem betreffenden Getriebegehäuse, die am Trennmedium abgeschieden worden sind, aus dem ersten Raum durch Schwerkraftwirkung ohne weiteres vollständig abfließen können.

Hierbei kann die Anordnung mit Vorteil so getroffen sein, dass das Separiergehäuse ein geschlossenes Ende und ein offenes, durch einen Gehäusedeckel verschließbares Ende aufweist und dass der erste Leitungsanschluss am geschlossenen Ende an dem radial außenliegenden Rand des Hohlzylinders gelegen ist.

Hinsichtlich der konstruktiven Gestaltung des Trennmediums kann die Anordnung so getroffen sein, dass ein patronenartiger Filtereinsatz, der vom offenen Ende des Separiergehäuses einsetzbar ist, das das Trennmedium bildende Filtermedium aufweist, das im Filtereinsatz einen den zweiten Raum begrenzenden Innenzylinder bildet, der an dem durch den Gehäusedeckel verschließbaren Ende des Separiergehäuses offen ist. Durch die so gebildete Fluidverbindung des zweiten Raumes mit dem Gehäusedeckel kann an diesem der zur Atmosphäre führende zweite Leitungsanschluss unmittelbar vorgesehen sein.

Diesbezüglich kann die Anordnung mit Vorteil so getroffen sein, dass der Gehäusedeckel einen zentralen Hohlraum besitzt, der bei der das Separiergehäuse abschließenden Schließposition mit dem offenen Ende des den zweiten Raum bildenden Innenzylinders fluchtend in Verbindung ist, wobei der zweite Leitungsanschluss am Gehäusedeckel einen sich aus dem Hohlraum in radialer Richtung weg erstreckenden Abflusskanal bildet.

Bei besonders vorteilhaften Ausführungsbeispielen ist zwischen Gehäusedeckel und Separiergehäuse eine Verbindungseinrichtung vorgesehen, mittels deren der Gehäusedeckel in der Schließposition derart anbringbar ist, dass der zweite Leitungsanschluss aus dem Hohlraum des Gehäusedeckels heraus einen nach unten gerichteten Abflusskanal für Stoffe flüssiger Phase bildet.

Bei besonders bevorzugten Ausführungsbeispielen ist die Verbindungseinrichtung in Form einer Schnappsicherung ausgebildet, die elastische Haltefinger am Gehäusedeckel und damit in Rasteingriff bringbare Rastkörper am Separiergehäuse aufweist, wobei mit den Haltefingern zusammenwirkende Führungsteile am Separiergehäuse für die Schließposition des Gehäusedeckels eine Drehposition mit untenliegendem zweiten Leitungsanschluss vorgeben. Somit können Stoffe flüssiger Phase, etwa bis zum Filtermedium vorgedrungenes Wasser, durch Schwerkrafteinfluss wieder zur Atmosphäre zurückfließen.

Bei besonders bevorzugten Ausführungsbeispielen kann eine Tülle aus elastomerem Werkstoff auf das Separiergehäuse derart aufschiebbar sein, dass sie einen die Haltefinger im Rasteingriff haltenden Sicherungsring bildet, wobei die Tülle mit einer in ihrem Umfang befindlichen Ringnut mit einem Trägerteil der Halterung verclipsbar ist, so dass die Tülle, zusätzlich zu ihrer Sicherungsfunktion, eine nachgiebige Lagerung des Separiergehäuses bildet.

Nachstehend ist die Erfindung anhand eines in der Zeichnung dargestellten Ausführungsbeispieles im Einzelnen erläutert. Es zeigen:

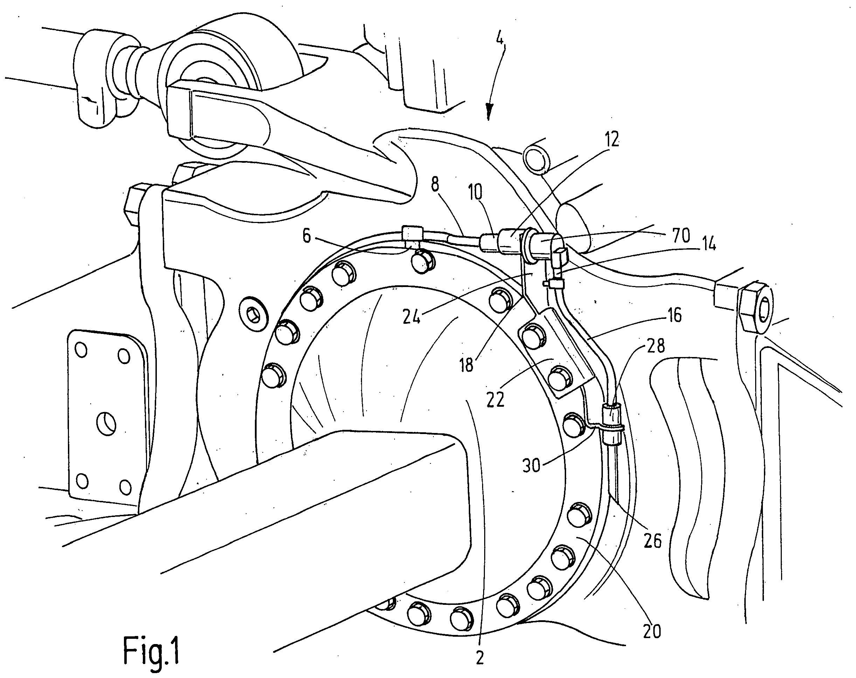

- Fig. 1: eine abgebrochen und schematisch vereinfacht gezeichnete perspektivische Schrägansicht eines Teiles einer Fahrzeug-Antriebsachse mit einem Getriebegehäuse, das mit einem Ausführungsbeispiel des erfindungsgemäßen Be- und Entlüftungssystems versehen ist;
- Fig. 2: eine gegenüber Fig. 1 vergrößert gezeichnete perspektivische Schrägansicht des gesondert dargestellten Ausführungsbeispieles des erfindungsgemäßen Be- und Entlüftungssystems;
- Fig. 3: eine auseinandergezogen und gegenüber einer praktischen Ausführungsform geringfügig verkleinert gezeichnete, perspektivische Darstellung lediglich des Separiergehäuses des Ausführungsbeispieles; und
- Fig. 4: einen gegenüber einer praktischen Ausführungsform etwa 1 ½-fach vergrößert gezeichneten Längsschnitt des Separiergehäuses des Ausführungsbeispieles.

Nachstehend ist die Erfindung anhand eines Beispieles erläutert, bei dem als mittels des erfindungsgemäßen Systems zu belüftendes und entlüftendes Behältnis das Getriebegehäuse 2 der lediglich teilweise und schematisiert angedeuteten Antriebesachse 4 eines Nutzfahrzeuges vorgesehen ist. In der bei derartigen Einrichtungen üblichen Art und Weise ist das Getriebegehäuse 2 mit einer Ölfüllung versehen, wobei sich oberhalb des Ölspiegels ein gewisses Luftvolumen befindet. Für den Druckausgleich über den gesamten Betriebstemperaturbereich der Antriebsachse 4 befindet sich an einer bei normaler Einbaulage des Getriebegehäuses 2 auf dem höchsten Höhenniveau gelegenen Stelle am Getriebegehäuse 2 ein Be- und Entlüftungsanschluss 6. Dieser ist über eine einen ersten Abschnitt eines Leitungssystemes bildende erste Schlauchleitung 8 mit einem ersten Leitungsanschluss 10 eines Separiergehäuses 12 in Verbindung. Dieses weist einen zweiten Leitungsanschluss 14 auf, von dem eine einen zweiten Abschnitt eines Leitungssystemes bildende Schlauchleitung 16 zur Atmosphäre führt. Mittels einer mit dem Getriebedeckel 20 verschraubten Halterung 18 ist das Separiergehäuse 12 in seiner Funktionslage derart angebracht, dass es gegenüber dem Be- und Entlüftungsanschluss 6 am Getriebegehäuse 2 auf einem höheren Niveau gelegen ist, so dass die Schlauchleitung 8 eine Gefällstrecke bildet, über die durch Schwerkrafteinfluss ein Fluidabfluss vom Separiergehäuse 12 zum Getriebegehäuse 2 erfolgen kann.

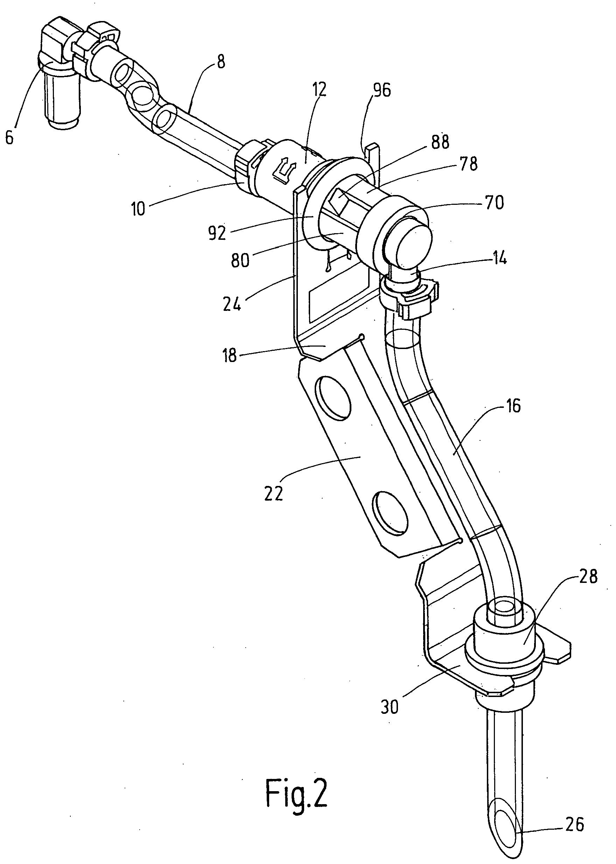

Die Fig. 2 zeigt nähere Einzelheiten der Halterung 18 mit einer Verschraubungslasche 22 zur Verschraubung mit dem Gehäusedeckel 20 und einem Trägerteil 24, das sich von der Lasche 22 abgewinkelt nach oben erstreckt und die eigentliche Lagerung für das Separiergehäuse 12 bildet. Die zweite Schlauchleitung 16, die vom zweiten Leitungsanschluss 14 des Separiergehäuses 12 zur Atmosphäre führt, erstreckt sich vom zweiten Leitungsanschluss 14 eine beträchtliche Strecke nach unten bis zum Schlauchende 26, das abgeschrägt ist. Dies begünstigt, dass der flexible Schlauch beispielsweise dem Wasserstrahl eines Reinigers ausweichen kann, wenn das betreffende, zugehörige Fahrzeug gereinigt wird. In einem Abstand vom Schlauchende 26 ist die Schlauchleitung 16 mittels einer elastischen Schlauchlagerung 28 gehalten, die die in einen das untere Ende der Halterung 18 bildenden Ansatz 30 eingeclipst ist.

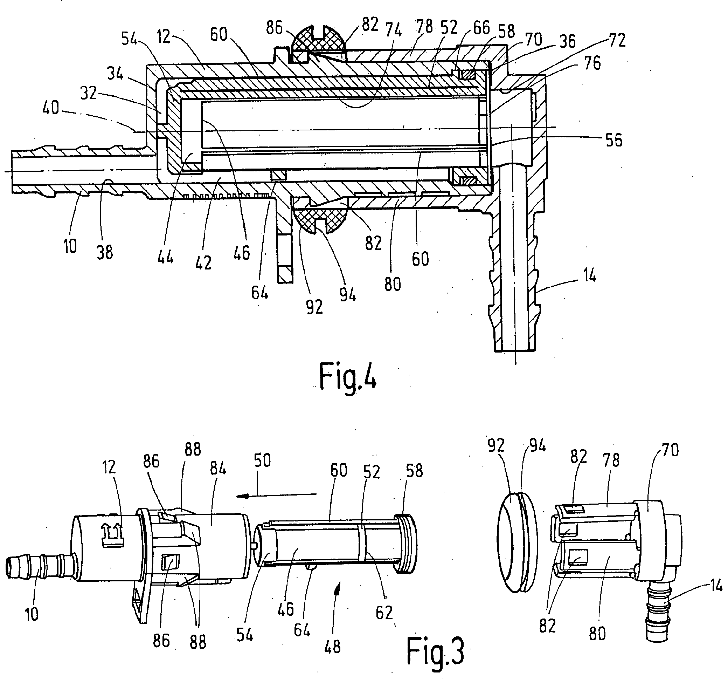

Nähere Einzelheiten des Separiergehäuses 12 sind den Fig. 3 und 4 entnehmbar. Wie ersichtlich, bildet das Separiergehäuse 12, das im großen Ganzen zylinderförmig gestaltet ist, im Inneren einen Hohlzylinder 32, mit einem geschlossenen Ende 34 und einem offenen Ende 36. Am geschlossenen Ende 34 befindet sich der erste Leitungsanschluss 10 in einer solchen Lageanordnung, dass ein Zu- und Abflusskanal 38 in den Hohlzylinder 32 an dessen bei der normalen Funktionslage am weitesten untenliegenden Bereich mündet. Dieser am weitesten unterhalb der Längsachse 40 des Hohlzylinders 32 liegende Bereich bildet den an die Innenwand des Hohlzylinders 32 angrenzenden ersten Raum 42. Dieser erste Raum 42 ist durch das sich im Separiergehäuse 12 befindliche Trennmedium von dem zweiten Raum 44 getrennt, der zur Atmosphärenseite gehört.

Bei dem vorliegenden Beispiel ist das Trennmedium durch ein oleo- und hydrophobe Eigenschaften aufweisendes Filtermedium 46 gebildet, das Teil eines patronenartigen Filtereinsatzes 48 ist, der bei der auseinandergezogenen Darstellung von Fig. 3 gesondert sichtbar ist und in den Hohlzylinder 32 vom offenen Ende 36 her in Richtung des Pfeiles 50 einsetzbar ist. Das Filtermedium 46 bildet einen Innenzylinder 74 innerhalb einer aus Kunststoff spritzgeformten Stützstruktur 52 mit einem geschlossenen Ende 54 und einem offenen Ende 56, das bei eingebautem Filtereinsatz 48 mit dem offenen Ende 36 des Hohlzylinders 42 fluchtet. Im Bereich des offenen Endes 56 ist die Stützstruktur 52 durch einen O-Ring 58 gegenüber der Innenwand des Hohlzylinders 32 abgedichtet. Somit sind innerhalb des Hohlzylinders 32 erster Raum 42 und zweiter Raum 44 mittels des als Trennmedium dienenden Filtermediums 46 vollständig voneinander getrennt, was einen Übertritt von Stoffen flüssiger Phase in Form von Öl oder Ölkondensat vom ersten Leitungsanschluss 10 her oder von Wasser vom zweiten Leitungsanschluss 14 her anbelangt, während ein Luftvolumenstrom für einen Druckausgleich zwischen den Räumen 42 und 44 ermöglicht ist.

Die Stützstruktur 52 weist längs verlaufende Stege 60 und quer verlaufende Stege 62 auf, von denen in Fig. 3 und 4 nicht sämtliche sichtbar sind und die nicht sämtliche gleichen Materialquerschnitt aufweisen. So ist bei der in Fig. 4 gezeigten Einbaulage der in Fig. 4 oben liegende Steg 60 mit einem größeren Materialquerschnitt versehen und liegt an der Innenseite des Hohlzylinders 32 an. Demgegenüber befindet sich gemäß der zeichnerischen Darstellung am darunterliegenden, unteren Innenwandbereich des Hohlzylinders 32 keine daran anliegende, längs verlaufende Leiste, so dass zwischen dem Filtereinsatz 48 mit seinen insgesamt drei Stützleisten und der Innenwand des Hohlzylinders 32 ein den ersten Raum 42 bildender Freiraum vorhanden ist. Als Abstandhalter zur Beibehaltung dieses Freiraumes befindet sich an der in Fig. 3 und 4 nicht sichtbaren quer verlaufenden Leiste 62 ein knopfartiger, radial geringfügig vorstehender Vorsprung 64, der bei der in Fig. 4 gezeigten Einbaulage am Boden des ersten Raumes 42 an der Innenwand des Hohlzylinders 32 anliegt. Beim Zusammenbringen von Filtereinsatz 48 und Separiergehäuse 12, wie es in Fig. 3 durch den Bewegungspfeil 50 angedeutet ist, wird der Filtereinsatz 48 in entsprechender Position eingeschoben. Im Betrieb bleibt diese Position erhalten, da der O-Ring 58 am offenen Ende 56 der Stützstruktur 42 mit einer abdichtenden Vorspannung an der Innenwand einer Randvertiefung 66 im Endabschnitt des Separiergehäuses 12 anliegt.

Das Separiergehäuse 12 ist am offenen Ende 36 durch einen in Fig. 3 für sich sichtbaren Gehäusedeckel 70 verschließbar. Dieser weist einen zentralen Hohlraum 72 auf, der bei der in Fig. 4 gezeigten Schließposition an das offene Ende 76 des Innenzylinders 74 angrenzt, der durch das Filtermedium 46 gebildet ist und den zweiten Raum 44 beinhaltet. Von dem mit dem zweiten Raum 46 verbundenen Hohlraum 72 des Deckels 70 erstreckt sich der zweite Leitungsanschluss 14 in radialer Richtung nach unten. Für die Anbringung des Deckels 70 am Separiergehäuse 12 ist eine Verbindungseinrichtung in Form einer Schnappsicherung vorgesehen. Hierbei sind am Deckel 70 umfänglich verteilte, sich axial erstreckende Haltefinger 78 und 80 vorgesehen, die Durchbrüche 82 aufweisen, die, wenn die Haltefinger 78 und 80 auf den Zylindermantel 84 aufgeschoben werden, mit Rastkörpern 86 verrasten. Um sicherzustellen, dass der Deckel 70 in die Schließposition, d. h. in Schnappverbindung, nur dann gebracht werden kann, wenn die in Fig. 3 und 4 gezeigte Drehposition gegeben ist, bei der sich der zweite Leitungsanschluss 14 vertikal nach unten erstreckt, sind am Separiergehäuse 12 Führungskörper 88 zwischen den Rastkörpern 86 ausgebildet, die zwischen sich unterschiedlich große Abstände freilassen. Hieran angepasst, weisen die Haltefinger 78 und 80 eine unterschiedliche Breite auf, so dass Deckel 70 und Separiergehäuse 12 nur in einer gewünschten Drehposition so zusammenfahrbar sind, dass die Schnappverbindung zustande kommt.

Eine Tülle 92 aus elastomerem Material, die in Fig. 3 gesondert sichtbar und in Fig. 4 in der Wirkposition dargestellt ist, bildet in aufgeschobener Wirkposition einen Sicherungsring, der die Haltefinger 78, 80 überliegt und den Rasteingriff sichert. Die Tülle 92 weist eine umfängliche Ringnut 94 auf, mit der sie in einen Ausschnitt 96 am Trägerteil 24 der Halterung 18 einclipsbar ist, so dass die Tülle 92 in Zusatzfunktion eine elastische Lagerung des Separiergehäuses 12 bildet.

Für einen wirksamen Schutz gegen Eindringen von Staub oder Schmutzpartikeln von der Atmosphäre her kann das Filtermedium 46 eine entsprechende Filterfeinheit aufweisen. Bei derartiger Auslegung des Filtermediums 46 lassen sich oleophobe und hydrophobe Eigenschaften bei gleichzeitiger Durchlässigkeit in einem für den Druckausgleich erforderlichen Maße realisieren.

## Patentansprüche

1. System zur Be- und Entlüftung von ein Fluidvolumen enthaltenden Behältnissen, wie eine Ölfüllung enthaltenden Getriebegehäusen (2), mit einem das betreffende Behältnis mit der Atmosphäre verbindenden Leitungssystem (8, 16), das bei durch Temperaturänderungen bewirkten Änderungen der im Behältnis befindlichen Volumina, einen Druckausgleich ermöglicht, wobei das Leitungssystem (8, 16) ein Separiergehäuse (12) enthält, in dem ein oleo- und hydrophobe Eigenschaften aufweisendes Trennmedium (46) einen mit dem Behältnis verbundenen ersten Raum (42) von einem mit der Atmosphäre verbundenen zweiten Raum (44) trennt, **dadurch gekennzeichnet, dass** am Separiergehäuse (12) Leitungsanschlüsse (10, 14) derart gelegen sind, dass am Trennmedium (46) abgeschiedene Stoffe flüssiger Phase aus dem ersten Raum (42) zum Behältnis und aus dem zweiten Raum (44) zur Atmosphäre abfließen können, und dass das Separiergehäuse (12) einen den ersten (42) und zweiten (44) Raum umgebenden Hohlzylinder (32) bildet, dessen Achse (40) bei einer Funktionslage horizontal verläuft, so dass der untenliegende Bereich der Innenwand des Hohlzylinders (32) den den ersten Raum (42) begrenzenden Boden bildet, an dem der erste Leitungsanschluss (10) mündet.

2. System nach Anspruch 1, **dadurch gekennzeichnet, dass** das Trennmedium durch ein oleo- und hydrophobe Eigenschaften aufweisendes Filtermedium (46) gebildet ist.

3. System nach einen der vorhergehenden Ansprüche, **dadurch gekennzeichnet, dass** eine Halterung (18) vorgesehen ist, mittels deren das Separiergehäuse (12) derart festlegbar ist, dass es in seiner Funktionslage auf einem oberhalb des Behältnisses gelegenen Höhenniveau liegt und dass der erste Raum (42) an den untenliegenden Boden des Separiergehäuses (12) angrenzt, an dem der zum Behältnis führende erste Leitungsanschluss (10) mündet.

4. System nach einen der vorhergehenden Ansprüche, **dadurch gekennzeichnet, dass** das Separiergehäuse (12) ein geschlossenes Ende (34) und ein offenes, durch einen Gehäusedeckel (70) verschließbares Ende (36) aufweist und dass der erste Leitungsanschluss (10) am geschlossenen Ende (34) an dem radial außenliegenden Rand des Hohlzylinders (32) gelegen ist.

5. System nach Anspruch 4, **dadurch gekennzeichnet, dass** ein patronenartiger Filtereinsatz (48), der vom offenen Ende (36) des Separiergehäuses (12) einsetzbar ist, das Filtermedium (46) aufweist, das im Filtereinsatz (48) einen den zweiten Raum (44) begrenzenden Innenzylinder (74) bildet, der an dem durch den Gehäusedeckel (70) verschließbaren Ende (36) des Separiergehäuses (12) offen ist.

6. System nach Anspruch 5, **dadurch gekennzeichnet, dass** der Gehäusedeckel (70) einen zentralen Hohlraum (72) besitzt, der bei der das Separiergehäuse (12) abschließenden Schließposition mit dem offenen Ende (76) des den zweiten Raum (44) bildenden Innenzylinders (74) fluchtend in Verbindung ist, und dass der zweite Leitungsanschluss (14) am Gehäusedeckel (70) einen sich aus dem Hohlraum (72) in radialer Richtung weg erstreckenden Abflusskanal bildet.

7. System nach Anspruch 6, **dadurch gekennzeichnet, dass** zwischen Gehäusedeckel (70) und Separiergehäuse (12) eine Verbindungseinrichtung vorgesehen ist, mittels deren der Gehäusedeckel (70) in der Schließposition derart anbringbar ist, dass der zweite Leitungsanschluss (14) in Zusammenwirkung mit dem Hohlraum (72) des Gehäusedeckels (70) den nach unten gerichteten Abflusskanal für Stoffe, insbesondere flüssiger Phase bildet.

8. System nach Anspruch 7, **dadurch gekennzeichnet, dass** die Verbindungseinrichtung in Form einer Schnappsicherung ausgebildet ist, die elastische Haltefinger (78, 80) am Gehäusedeckel (70) und damit in Rasteingriff bringbare Rastkörper (86) am Separiergehäuse (12) aufweist, und dass mit den Haltefingern (78, 80) zusammenwirkende Führungsteile (88) am Separiergehäuse (12) für die Schließposition des Gehäusedeckels (70) eine Drehposition mit untenliegendem zweiten Leitungsanschluss (14) vorgeben.

9. System nach Anspruch 8, **dadurch gekennzeichnet, dass** eine Tülle (92) aus elastomerem Werkstoff, auf das Separiergehäuse (12) derart aufschiebbar ist, dass sie eine die Haltefinger (78, 80) im Rasteingriff haltenden Sicherungsring bildet, und dass die Tülle (92) mit einer in ihrem Umfang befindlichen Ringnut (44) mit einem Trägerteil (24) der Halterung (18) verclipsbar ist, um eine nachgiebige Lagerung des Separiergehäuses (12) zu bilden.

## Claims

1. A system for ventilating and venting containers containing a fluid volume, such as gearboxes (2) containing an oil filling, with a line system (8, 16) which connects the respective container to the atmosphere and, upon changes in the volumes located in the container due to temperature changes, enables pressure equalisation, the line system (8, 16) containing a separating housing (12) in which a separating medium (46) which has oleo- and hydrophobic properties separates a first space (42) connected to the container from a second space (44) connected to the atmosphere, **characterised in that** on the separating housing (12), line connections (10, 14) are laid such that liquid phase substances which have been separated on the separating medium (46) can drain out of the first space (42) to the container and out of the second space (44) to the atmosphere, and that the separating housing (12) forms a hollow cylinder (32) which surrounds the first (42) and second (44) space the axis (40) of which in an operating position runs horizontally so that the underlying region of the inner wall of the hollow cylinder (32) forms the bottom which borders the first space (42) and on which the first line connection discharges (10).

2. The system according to Claim 1, **characterised in that** the separating medium is formed by a filter medium (46) that has oleo- and hydrophobic properties.

3. The system according to any of the preceding claims, **characterised in that** a mount (18) is provided by means of which the separating housing (12) can be fixed such that in its operating position it lies at a height which is above the container, and that the first space (42) borders the underlying bottom of the separating housing (12) on which the first line connection (10) which leads to the container discharges.

4. The system according to any of the preceding claims, **characterised in that** the separating housing (12) has one closed end (34) and one open end (36) which can be closed by a housing cover (70) and that the first line connection (10) is located on the closed end (34) on the radially outer edge of the hollow cylinder (32).

5. The system according to Claim 4, **characterised in that** a cartridge-like filter insert (48), which can be inserted from the open end (36) of the separating housing (12), which has the filter medium (46) which forms an inner cylinder (74) which borders the second space (44) in the filter insert (48) and which is open on the end (36) of the separating housing (12) which can be closed by the housing cover (70).

6. The system according to Claim 5, **characterised in that** the housing cover (70) has a central cavity (72) which is connected flush to the open end (76) of the inner cylinder (74) which forms the second space (44) in the closed position which seals the separating housing (12), and that the second line connection (14) on the housing cover (70) forms a drain channel which extends away from the cavity (72) in the radial direction.

7. The system according to Claim 6, **characterised in that** there is provided between the housing cover (70) and the separating housing (12) a connecting device by means of which the housing cover (70) can be fixed in the closed position such that the second line connection (14) forms the downwardly directed drain channel for in particular liquid phase substances in interaction with the cavity (72) of the housing cover (70).

8. The system according to Claim 7, **characterised in that** the connecting device is made in the form of a snap lock which has elastic retaining fingers (78, 80) on the housing cover (70) and so latch bodies (86) which can be engaged to it by latching onto the separating housing (12), and that guide parts (88) interacting with the retaining fingers (78, 80) on the separating housing (12) for the closed position of the housing cover (70) dictate a rotary position with the underlying second line connection (14).

9. The system according to Claim 8, **characterised in that** a bushing (92) of elastomer material can be slipped onto the separating housing (12) such that it forms a securing ring which keeps the retaining fingers (78, 80) latched, and that the bushing (92) is able to be clipped with an annular groove (44) located in its periphery to a carrier part (24) of the mount (18) in order to form a flexible support of the separating housing (12).

## Revendications

1. Système d'alimentation en air et de purge de récipients contenant des volumes de fluide, comme un carter (2) de transmission contenant un remplissage d'huile, comprenant un système (8, 16) de conduit, qui met le récipient concerné en communication avec l'atmosphère et qui rend possible une compensation de pression, s'il se produit des variations provoquées par des variations de température des volumes se trouvant dans le récipient, le système (8, 16) de conduit comportant une boîte (12) de séparation, dans laquelle un milieu (46) de séparation ayant des propriétés oléophobes et hydrophobes sépare un premier espace (42) communiquant avec le récipient d'un deuxième espace (44) communiquant avec l'atmosphère, **caractérisé en ce qu'**il est mis, sur la boîte (12) de séparation, des raccords (10, 14) de conduit, de manière à ce que des substances en phase liquide déposées sur le milieu (46) de séparation puissent s'écouler du premier espace (42) au récipient et du deuxième espace (44) à l'atmosphère, et **en ce que** la boîte (12) de séparation forme un cylindre (32) creux, qui entoure le premier espace (42) et le deuxième espace (44) et dont l'axe (40) s'étend en une position de fonctionnement horizontalement, de sorte que la partie se trouvant en bas de la paroi intérieure du cylindre (32) creux forme le fond délimitant le premier espace (42), où débouche le premier raccord (10) de conduit.

2. Système suivant la revendication 1, **caractérisé en ce que** le milieu de séparation est formé par un milieu (46) filtrant ayant des propriétés oléophobes et hydrophobes.

3. Système suivant l'une des revendications précédentes, **caractérisé en ce qu'**il est prévu une fixation (18), au moyen de laquelle la boîte (12) de séparation peut être fixée, de manière à se trouver dans sa position de fonctionnement à un niveau en hauteur au-dessus du récipient et de manière à ce que le premier espace (42) soit voisin du fond se trouvant en bas de la boîte (12) de séparation, où débouche le premier raccord (10) de conduit menant au récipient.

4. Système suivant l'une des revendications précédentes, **caractérisé en ce que** la boîte (12) de séparation a une extrémité (34) fermée et une extrémité (36) ouverte pouvant être fermée par un couvercle (70) de la boîte et **en ce que** le premier raccord (10) de conduit est mis à l'extrémité (34) fermée sur le bord, se trouvant à l'extérieur radialement, du cylindre (32) creux.

5. Système suivant la revendication 4, **caractérisé en ce qu'**un insert (48) de filtre de type en cartouche, qui peut être inséré par l'extrémité (36) ouverte de la boîte (12) de séparation, comporte le milieu (46) filtrant, qui forme, dans l'insert (48) de filtre, un cylindre (74) intérieur, qui délimite le deuxième espace (44) et qui est ouvert à l'extrémité (36), pouvant se fermer par le couvercle (70) de la boîte, de la boîte (12) de séparation.

6. Système suivant la revendication 5, **caractérisé en ce que** le couvercle (70) de la boîte a une cavité (72) centrale, qui, en la position de fermeture fermant la boîte (12) de séparation, est en liaison, en alignement, avec l'extrémité (76) ouverte du cylindre (74) intérieur formant le deuxième espace (44), et **en ce que** le deuxième raccord (14) de conduit forme, sur le couvercle (70) de la boîte, un canal d'évacuation s'éloignant dans la direction radiale de la cavité (72).

7. Système suivant la revendication 7, **caractérisé en ce qu'**il est prévu, entre le couvercle (70) de la boîte et la boîte (12) de séparation, un dispositif de liaison, au moyen duquel le couvercle (70) de la boîte peut être mis dans la position de fermeture, de manière à ce que le deuxième raccord (14) de conduit forme, en coopération avec la cavité (72) du couvercle (70) de la boîte, le canal dirigé vers le bas d'évacuation de substances, notamment en phase liquide.

8. Système suivant la revendication 7, **caractérisé en ce que** le dispositif de liaison est constitué sous la forme d'une sécurité à déclic, qui a des doigts (78, 80) élastiques de maintien sur le couvercle (70) de la boîte et ainsi des pièces (86) d'encliquetage, pouvant être mises en encliquetage, sur la boîte (12) de séparation, et **en ce que** des parties (88) de guidage, coopérant avec les doigts (78, 80) de maintien, sur la boîte (12) de séparation, prescrivent, pour la position de fermeture du couvercle (70) de la boîte, une position en rotation ayant le deuxième raccord (14) de conduit en bas.

9. Système suivant la revendication 8, **caractérisé en ce qu'**un verseur (92) en matériau élastomère peut coulisser sur la boîte (12) de séparation, de manière à former une bague de sécurité maintenant en encliquetage les doigts (78, 80) de maintien, et **en ce que** le verseur (92) peut être clipsé, par une rainure (44) annulaire se trouvant sur son pourtour, avec une partie (24) de support de la fixation (18) pour former un montage cédant élastiquement de la boîte (12) de séparation.
